# FASCICULE DE BREVET EUROPEEN

(11) **EP 1 573 412 B1**
(45) Date de publication et mention de la délivrance du brevet: **05.05.2010**
(21) Numéro de dépôt: 03799676.6
(22) Date de dépôt: 19.12.2003
(51) Int. Cl.: G05B 23/02

(54) **PROCEDE DE DIAGNOSTIC DE DEFAUTS DE FONCTIONNEMENT D UNE ARC HITECTURE FONCTIONNELLE**
DIAGNOSTISCHES VERFAHREN FÜR BETRIEBSFEHLER EINER FUNKTIONELE-ARCHITEKTUR
METHOD FOR DIAGNOSIS OF FUNCTIONAL FAULTS IN A FUNCTIONAL ARCHITECTURE

(30) Priorité: 20.12.2002 FR 0216353
(43) Date de publication de la demande: 14.09.2005
(73) Titulaire: RENAULT S.A.S., 92100 Boulogne Billancourt (FR)
(72) Inventeur: BOUTIN, Samuel, F-78114 Magny les Hameaux (FR)
(86) Numéro de dépôt international: PCT/FR2003/003851
(87) Numéro de publication internationale: WO 2004/059407

(56) Documents cités:
- EP-A- 0 707 250
- WO-A-02/071360
- DE-A- 10 048 144
- FR-A- 2 833 353
- US-A- 5 939 625

## Description

La présente invention est relative à un procédé de diagnostic de défauts de fonctionnement d'une architecture fonctionnelle. Ladite architecture peut être composée d'un ensemble de fonctions liées à des composants électroniques (Aⁿ_{i;} Cⁿᵢ;UCEₙ;B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants (Aⁿ_{i;} Cⁿᵢ; UCEₙ; B) dudit ensemble.

On connaît des ensembles de systèmes électroniques de ce type, conçus notamment pour équiper des véhicules automobiles. Un tel véhicule comprend couramment plusieurs systèmes assurant chacun l'exécution d'une prestation telle que la commande du moteur propulsant le véhicule, la gestion de la climatisation de l'habitacle, la gestion des liaisons du véhicule au sol (freinage, suspension...), la gestion de communications téléphoniques.

WO 02/071360 décrit un procédé de diagnostic de défauts.

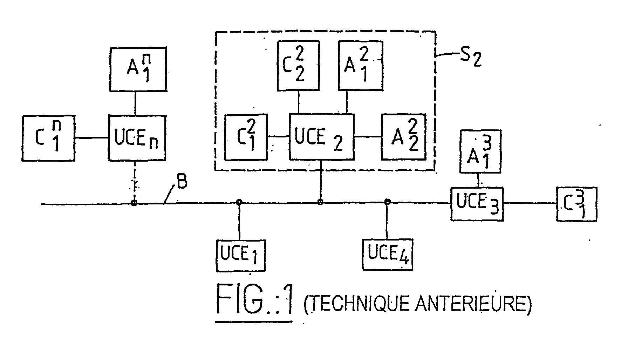

On a schématisé à là figure 1 du dessein annexé les composants matériels de l'ensemble de ces systèmes, par exemple pour vehicle. Ces composants comprennent essentiellement des unités de commande électroniques ou "calculateurs" UCEₘ, chaque calculateur étant éventuellement connecté à des capteurs Cⁿᵢ et à des actionneurs A^{m}ⱼ, tous les calculateurs étant connectés à au moins un même bus B pour y émettre ou recevoir des informations par exemple multiplexées, en provenance ou à destination des autres calculateurs connectés au bus B.

Ce multiplexage est obtenu notamment, comme cela est bien connu pour le bus CAN par exemple, en introduisant les informations en cause dans des messages matérialisés par des trames de signaux numériques.

A titre d'exemple illustratif, le système S₂ de "commande du moteur" comprend le calculateur UCE₂, plusieurs capteurs C²ᵢ sensibles à des grandeurs telles que le régime du moteur, à combustion interne par exemple, la pression au collecteur d'admission de ce moteur, la pression de l'air extérieur, la température de l'eau de refroidissement du moteur, celle de l'air, l'état de charge de la batterie, et plusieurs actionneurs A²ⱼ. Le calculateur UCE₂ est dûment programmé pour exécuter plusieurs fonctions de commande du moteur telles que : la régulation de ralenti, la régulation de la richesse du mélange air/carburant, le réglage de l'avance à l'allumage de ce mélange et la recirculation des gaz d'échappement. Pour ce faire le calculateur UCE₂ exploite des informations venues des capteurs C²ᵢ précités et élabore des signaux de commande des actionneurs A²ⱼ constitués par une vanne de commande d'air additionnel et une bobine d'allumage de bougie pour la fonction "régulation de ralenti", un injecteur de carburant pour la fonction "régulateur de richesse", la même bobine d'allumage pour la fonction "avance de l'allumage" et une vanne pour la fonction "recirculation de gaz d'échappement".

Les autres "prestations" évoquées ci-dessus, e.g. "climatisation de l'habitacle" et "liaison avec le sol", sont exécutées par des systèmes d'architecture analogue à celle présentée ci-dessus pour la commande du moteur.

Tous ces systèmes mis en communication par un même bus B constituent un réseau multiplexé. On conçoit alors que plusieurs fonctions relevant de systèmes différents peuvent exploiter des informations issues de mêmes capteurs, par exemple, ce qui évite de coûteuses redondances dans la structure de l'ensemble des systèmes. L'utilisation d'un réseau multiplexé permet aussi de réduire de manière très importante la longueur des lignes électriques interconnectant les différents éléments de l'ensemble. Un tel ensemble multiplexé permet aussi la mise en place de fonctions non classiques et éventuellement complexes, faisant intervenir parfois plusieurs systèmes et dites pour cette raison "transversales". A titre d'exemple illustratif et non limitatif, la perception de l'information "sac d'air (ou "airbag") déclenché", significative de ce que le véhicule a subi un choc, peut être traitée alors de manière à commander l'émission d'un appel au secours par un dispositif de téléphonie mobile embarqué dans le véhicule.

Un autre étape de la conception des systèmes électroniques est l'analyse de sûreté de fonctionnement qui consiste à identifier des événements redoutés tels qu'un pneu qui éclate, un défaut de fonctionnement d'un capteur essentiel sur une fonction critique, un défaut de fonctionnement d'un actionneur par exemple de freinage, afin d'améliorer la sécurité et de spécifier des modes dégradés de fonctionnement si nécessaire.

On note qu'un système sûre de fonctionnement est un système qui, d'une part diagnostique certains événements redoutés afin de mettre en oeuvre des modes de fonctionnement dégradés et d'autre part est tolérant aux événements redoutés non diagnostiqués selon l'analyse de sûreté de fonctionnement.

On connaît de la demande de brevet français N° 01 15819, déposée par la demanderesse et incorporée ici par référence, la notion de valeur particulière et son utilisation dans un procédé de diagnostic de défauts de fonctionnement d'un ensemble de systèmes électroniques.

Cependant, ce dit procédé ne s'applique qu'à un mode de réalisation donné d'une architecture fonctionnelle et ne peut pas être réutilisé pour un autre mode de réalisation.

La demanderesse a découvert que les valeurs particulières pouvaient être classées en catégories de telle manière que l'on puisse séparer des valeurs particulières, dites fonctionnelles, indépendantes du mode de réalisation par une architecture matérielle et des valeurs particulières dites opérationnelles, spécifiques au mode de réalisation par des calculateurs, bus de communication, et câblage.

La demanderesse a aussi découvert que les différentes catégories de valeurs particulières étaient liées en ce que une valeur particulière au niveau fonctionnel entraîne la création de valeurs particulières au niveau opérationnel. De la même manière, partant d'une analyse opérationnelle, on peut déduire une analyse fonctionnelle qui pourra être ré-appliqué sur d'autres modes de réalisations.

De cette manière on répond au problème cité ci-dessus par un procédé de diagnostic de défauts de fonctionnement d'une architecture fonctionnelle composée d'un ensemble de fonctions liées à des composants électroniques (Aⁿᵢ; Cⁿᵢ; UCEₙ; B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants (Aⁿᵢ; Cⁿᵢ, UCEₙ; B) dudit ensemble, ce procédé étant **caractérisé en ce que**, étant donné un ensemble de fonctions, réalisant une prestation, dont les données d'entrées et de sorties peuvent être liées à des capteurs ou des actionneurs, il comporte :
- une étape de détermination de valeurs particulières au cours de laquelle on liste les valeurs particulières correspondant à des défauts de fonctionnement des capteurs et des actionneurs,
- une étape de détermination de propagation au cours de laquelle on liste les valeurs particulières permettant la propagation de l'information relative à ces défauts à travers les dites fonctions,
- une étape de diagnostic au cours de laquelle on forme le diagnostic fonctionnel de ladite prestation en fonction des listes issues des étapes de détermination et
- une étape d'enregistrement des valeurs particulières et de leur propagation sur un moyen de mémorisation pour un outil prévu pour la validation de ladite architecture.

De cette manière on définit un diagnostic fonctionnel indépendant du mode de réalisation et donc réutilisable pour plusieurs modes de réalisation des fonctions par les calculateurs et bus. Le diagnostic est conçu avant le choix d'une architecture matérielle (calculateurs et bus) pouvant l'accueillir, ce qui permet de gagner du temps dans sa conception. Il sera comprise que le terme composants électroniques couvre tous composants électroniques et électriques produisant et consommant des donnés.

Selon une caractéristique particulière, après l'étape de diagnostic fonctionnel, étant donné le choix d'un mode de réalisation se traduisant par
- une architecture matérielle constituée de calculateurs, réseaux, liaisons filaires et connecteurs,
- et le placement des fonctions sur ladite architecture matérielle,
on liste les valeurs particulières selon le procédé de la revendication 1 afin de déduire un diagnostic opérationnel de l'architecture électrique-électronique résultante.

De cette manière, le diagnostic pour un placement est généré, au moins en partie, automatiquement.

Selon d'autres caractéristiques, les valeurs particulières sont classifiées après placement des fonctions sur ladite architecture matérielle

Selon d'autres caractéristiques, les valeurs particulières sont classifiées après placement des fonctions sur ladite architecture matérielle parmi au moins une des classes suivantes :
- bus coupé,
- trame corrompue,
- court-circuit appliqué à un fil,
- faux contact appliqué à un connecteur de faisceaux, de capteur, d'actionneur ou de calculateur, et
- défaut d'exécution appliqué à un micro-contrôleur.

De cette manière, le diagnostic après placement est généré automatiquement par catégories et le concepteur peut ne pas spécifier le diagnostic de certaines catégories, parce qu'elles sont plus fiables par exemple, afin de réduire le coût de conception.

Notons que le fait d'écarter une seule catégorie, par exemple les court-circuits, permet implicitement de la diagnostiquer puisque si un défaut ne provient d'aucune des autres, les défauts de ladite catégorie restent les seuls candidats à l'explication d'un problème.

Selon des caractéristiques particulières étant donné un diagnostic opérationnel, pour une prestation, ayant listé les valeurs particulières fonctionnelles relevant des capteurs, actionneurs et fonctions réalisant ladite prestation, pour au moins un flot de données entre deux fonctions, ou entre un capteur et une fonction, ou entre une fonction et un actionneur, pour lequel aucune valeur particulière fonctionnelle n'est définie, si une valeur particulière opérationnelle est définie, alors on détermine automatiquement une valeur particulière fonctionnelle nouvelle pour ce flot.

De cette manière, étant donné le diagnostic du placement d'une architecture fonctionnelle, on déduit un diagnostic fonctionnel de ladite architecture fonctionnelle qui peut s'appliquer à d'autres placements.

Selon des caractéristiques particulières, on vise un procédé de diagnostic caractérisé en ce pour chaque étape de la revendication 1, on liste non seulement les valeurs particulières, mais aussi les événements redoutés non diagnostiqués et les événements redoutés non diagnosticables pour former une analyse de sûreté de fonctionnement d'une architecture fonctionnelle.

De cette manière, l'analyse de sûreté de fonctionnement peut être réalisée, au moins en partie, avant qu'un mode de réalisation par des calculateurs et réseaux ne soit choisi.

Selon des caractéristiques particulières, on vise un procédé de diagnostic **caractérisé en ce que** , étant donné le choix d'un mode de réalisation se traduisant par
- une architecture matérielle constituée de calculateurs, réseaux, liaisons filaires et connecteurs,
- et le placement des fonctions sur ladite architecture matérielle,
on liste les valeurs particulières et événements redoutés selon le procédé de la revendication 5 afin de déduire une analyse de sûreté de fonctionnement fonctionnelle de l'architecture fonctionnelle résultante.

De cette manière, l'analyse de sûreté de fonctionnement peut, au moins en partie, être générée automatiquement.

Le procédé peut comprendre une étape d'analyse de la faisabilité et/ou faillibilité de fonctionnement dudit architecture et de la établissement d'une sortie indiquant ladite faisabilité et/ou faillibilité.

La présente invention fournit aussi un article de commerce comportant une mémoire lisible par un ordinateur, un programme exécutable par un ordinateur étant enregistré sur ladite mémoire pour le diagnostic de défauts de fonctionnement d'une architecture fonctionnelle, **caractérisé en ce que** ledit programme inclut un codage pour:
i) déterminer et lister des valeurs particulières correspondant à des défauts de fonctionnement des capteurs et des actionneurs,
ii) déterminer et lister les valeurs particulières permettant la propagation de l'information relative à ces défauts à travers ladite architecture fonctionnelle,
iii) former le diagnostic fonctionnel de ladite prestation en fonction des listes issues des étapes (i) et (ii) et
iv) enregistrer lesdites valeurs particulières et leur propagation sur un moyen de mémorisation pour un outil prévu pour la validation de ladite architecture.

La présente invention fournit aussi un outil informatique programmé pour le diagnostic de défauts de fonctionnement d'une architecture fonctionnelle utilisant des étapes du procédé de la présente invention ou programmé en utilisant un article de commerce de la présente invention.

Ledit architecture peut comporter un architecture pour équiper un véhicule.

D'autres buts, caractéristiques et avantages de la présente invention apparaîtront à titre d'exemple à la lecture de la description qui va suivre et à l'examen du dessin annexé dans lequel :
- la figure 1 est un schéma d'un ensemble de systèmes électroniques qu'on se propose de doter de moyens de diagnostic de défauts de fonctionnement suivant la présente invention, cet ensemble étant décrit dans le préambule de la présente description et,
- la figure 2 est un schéma illustrant un type de placement d'une fonction sur une architecture matérielle

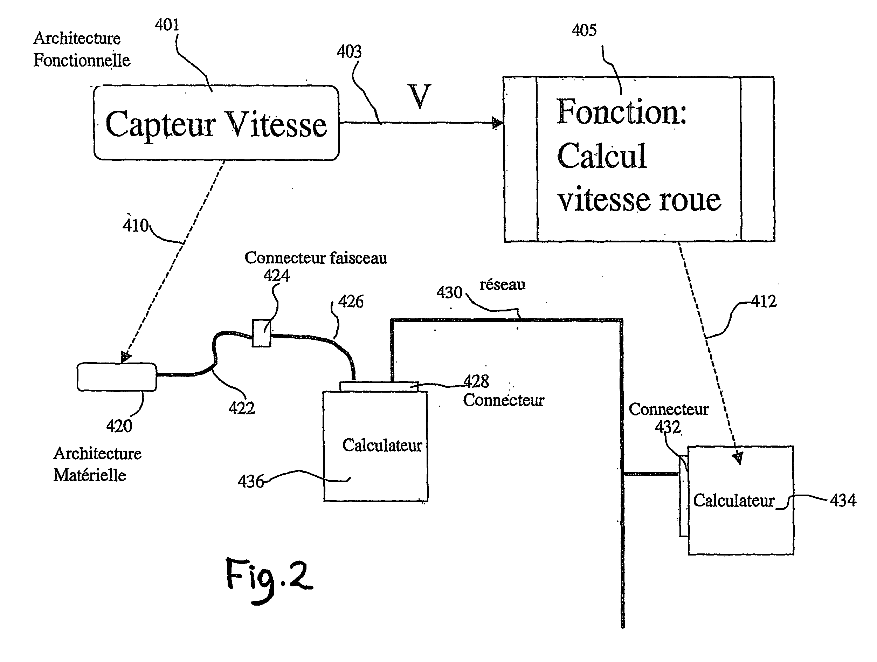

En figure 2, la fonction "Calcul vitesse roue" 405 consomme une donnée brute "V" 403, provenant du capteur "vitesse roue" 401. Un diagnostic de la donnée V peut être déterminé à partir d'une information provenant du capteur "vitesse roue" 401 ou par un filtrage en entrée de la fonction "Calcul vitesse roue" 405. Supposons que ce diagnostic soit déterminé par une valeur particulière de "V" 403, par exemple la valeur particulière "Vpart" de "V".

Dans la figure 2, dans un mode de réalisation particulier, le capteur vitesse 420 est rattaché à un calculateur 436 et la fonction "Calcul vitesse roue" 405 est réalisée par un processus exécuté sur un autre calculateur 434.

La transformation du capteur vitesse 401 d'une architecture fonctionnelle en capteur vitesse 420 d'une architecture matérielle est symbolisé par la flèche 410. De même, l'implantation de la fonction "Calcul vitesse roue" 405 de l'architecture fonctionnelle sur le calculateur 434 est symbolisé par la transformation 412. On note que le flot de données entre le capteur vitesse 401 et la fonction "Calcul vitesse roue" 405 est transformé en un chemin complexe de l'architecture matérielle, chemin impliquant :
- deux calculateurs 436 et 434 et leur connecteurs respectifs 428 et 432,
- un réseau 430,
- des liaisons filaires 422 et 426, et
- un connecteur de faisceaux 424.

Une valeur particulière A de type "court circuit" est associée au chemin formé des fils 422 et 426 entre le capteur 420 et le calculateur 436 auquel il est rattaché, cette valeur caractérisant aussi un défaut de connexion au niveau de l'un, au moins, des connecteurs 424 et 428.

Une valeur particulière B caractérisant l'état de fonctionnement du calculateur 436 indique si le relai de la donnée "V" sur ce dit calculateur 436 peut s'effectuer dans de bonnes conditions.

Une valeur particulière C caractérisant l'état de fonctionnement du bus 430 prend en compte l'absence de transmission de la donnée "V" sur ledit bus 430.

Les valeurs particulière A, B, C sont, conformément à l'invention, considérées en plus de la valeur particulière de V pour le diagnostic du flot de données entre le capteur de vitesse 420 et l'exécution de la fonction "Calcul vitesse roue" sur le calculateur 434 sur lequel elle est placée.

Les valeurs particulière A, B, C qui peuvent être des valeurs particulières de "V" ou d'une ou plusieurs autres données, peuvent être déterminés automatiquement à partir de la projection du flot de données sur l'architecture matérielle.

En effet,
- les types de défauts entre un capteur et un calculateur ou entre un calculateur et un actionneur sont des défauts de connectique sur le chemin filaire suivi par la donnée V et peuvent être caractérisés par une valeur particulière sur le calculateur recevant le signal à condition qu'il existe une fonction pour les diagnostiquer;
- les types de défauts liés à l'exécution d'une fonction sur un calculateur sont diagnostiqués par ledit calculateur, un mode de réalisation étant l'émission d'une valeur particulière en cas d'échec d'un calcul de CRC (Cyclic Redundancy Check) ou test de redondance cyclique par exemple ou encore l'émission systématique d'une valeur particulière signalant le bon fonctionnement du calculateur, la valeur particulière ayant alors le rôle d'un diagnostic de bon fonctionnement et l'absence d'émission de ladite valeur particulière correspondant alors à une défaut de fonctionnement dudit calculateur; et
- les types de défauts liés à la transmission de données sur un bus sont générés à partir d'une stratégie de gestion de réseau où chaque calculateur du réseau observe les autres et interprète une absence de réception comme une perte transitoire de connexion, ceci pouvant être caractérisé par une valeur particulière.

Dès lors, pendant l'étape de placement, le diagnostic de la donnée V peut être enrichi des valeurs particulières A, B et C, afin d'aider à la localisation d'un éventuel défaut, en plus de la valeur particulière "Vpart" provenant du capteur déjà spécifié avant placement dans l'architecture fonctionnelle.

Réciproquement, étant donné un diagnostic pour le mode de réalisation de la figure 2, si une valeur particulière est définie pour l'un quelconque des éléments 420, 422, 424, 426, 428, 436, 430 et 432, pour la consommation de la donnée V par la fonction "Calcul vitesse roue", alors on peut en déduire qu'il est nécessaire de spécifier au moins une valeur particulière du flot de données V dans l'architecture fonctionnelle.

On note que le procédé ainsi définit s'étend sans peine à un procédé d'analyse de sûreté de fonctionnement, l'analyse de sûreté de fonctionnement pratiquée sur une architecture fonctionnelle pouvant ensuite être raffinée au moment du placement de ladite architecture fonctionnelle sur une architecture matérielle. Le seul enrichissement réside en ce que dans une analyse de sûreté de fonctionnement, on considère non seulement des valeurs particulières correspondant à des défauts détectables par le système, mais on prend aussi en compte des événements redoutés non détectés par le système.

Cependant, ce changement de point de vue ne modifie pas le procédé proposé dans la présente invention.

Ci-dessous, on prend l'exemple de la prestation accès à un véhicule et on s'intéresse plus particulièrement à la sûreté de fonctionnement de la prestation en cas de "CRASH", c'est-à-dire d'accident grave détecté par un capteur spécifique, ici un accéléromètre. Dans un tel contexte, le cas d'utilisation que nous appellerons "CRASH" est: "Dans un contexte moteur tournant, si un crash est détecté, alors les ouvrants du véhicule doivent se déverrouiller d'urgence". On veut s'assurer qu'effectivement, suite à un crash, les portes seront déverrouillées afin que les sauveteurs puissent enlever rapidement les passagers du véhicule, par exemple. Tous les événements qui peuvent nuire à la bonne exécution de ce cas d'utilisation sont redoutés.

Dans la suite, on appelle pilote une fonction dédiée à la gestion d'un capteur ou d'un actionneur, c'est à dire la fonction de capture et mise en forme d'une donnée provenant d'un actionneur ou la fonction de mise en forme d'une donnée de consigne et commande d'un actionneur suivant ladite consigne.

Pour implémenter le cas du CRASH, une requête "crash détecté" est spécifiée. Elle est réalisée par une fonction appelée "crash-détecté" qui capture la valeur fournie par un accéléromètre "A". Cette valeur est évaluée en un bit de statut "a" indiquant si un choc est détecté. Le pilote logiciel de capture de l'accélération en provenance du capteur "A" est le programme "P1". lorsqu'un Crash est détecté, le système pas dans un état que nous nommerons "Déverrouillage d'urgence". Dans cet état, la fonction "déverrouillage des portes" est exécutée. Cette exécution résulte en l'affectation d'une donnée "d" à la valeur "1" lue par un pilote (programme de commande d'actionneur des verrous) logiciel P2 qui commande à l'ouverture les verrous des portes Vi.

Le séquencement des opérations en cas de crash est alors par exemple:
- l'accéléromètre a détecté une valeur de crash,
- le pilote P1 est exécuté,
- la fonction qui réalise la demande "crash détecté" est évaluée,
- le bit "a" de détection du crash est mis à la valeur "1", ce qui correspond dans notre exemple à une validation du passage dans l'état suivant :
   - le passage dans l'état "Déverrouillage d'urgence" est réalisé,
   - l'opération élémentaire déverrouillage des portes est activée,
   - la donnée "d" est mise à la valeur "1",
   - le logiciel P2 est exécuté, et
   - les verrous Vi sont commandés en position déverrouillé.

Si on s'intéresse aux événements redoutés qui affectent l'opération élémentaire crash-detecté-valide, on a par exemple :
- le capteur A est défaillant, et
- P1 est défaillant,

On suppose que, pour chacune de ces défaillances, si elles peuvent être diagnostiquées, les fonctions passent éventuellement dans un mode de fonctionnement dégradé suivant un procédé connu. Dans le procédé que nous présentons, la notion de passage en mode dégradé, bien connue de l'homme du métier, n'intervient pas, le passage au niveau fonctionnel et au niveau opérationnel étant équivalent. Nous ne parlerons donc pas de cet aspect de l'analyse de sûreté de fonctionnement dans notre description.

Si, maintenant, l'opération élémentaire crash-detecté-valide est placée sur un calculateur UCH et si, d'une part, le capteur A est attaché à un calculateur "Airbag", et, d'autre part, ces deux calculateurs sont liés par un bus de donné CAN et que la donnée A circule sur la trame T, alors les événements redoutés qui affectent l'opération élémentaire sont enrichis et deviennent :
- le capteur A est intrinsèquement défaillant,
- l'un des fils ou des connecteurs entre le capteur A et le calculateur Airbag est en défaut (fil coupé, défaut de connectique,...),
- l'un des autres fils et connecteurs liant le capteur A aux autres calculateurs est en défaut et crée un défaut du capteur A,
- l'exécution de P1 est défaillante,
- le calculateur Airbag sur lequel P1 s'exécute est en défaut,
- le bus CAN est coupé,
- la trame T ne circule pas suite à un défaut du pilote CAN sur l'Airbag,
- la trame T n'est pas lue correctement par le calculateur habitacle, et
- le calculateur habitacle est en défaut.

Suivant un autre placement, d'autres événements correspondant aux nouveaux calculateurs et réseaux et éléments de connectique impliqués sont spécifiés.

On peut donc, lors de la description de la prestation, spécifier un ensemble d'événements s'appliquant aux capteurs, actionneurs, pilotes, données, opérations élémentaires. Lorsque le placement est réalisé, le placement sur des calculateurs connectés par des réseaux permet d'enrichir automatiquement la description des passages en modes dégradés ou des propagations de défaut en prenant en compte :
- pour un capteur ou un actionneur, l'ensemble des défauts pour chaque fil, et chaque connecteur liant ce capteur ou cet actionneur aux différents calculateurs et masses,
- pour un pilote, un défaut d'exécution logiciel ou un défaut de la plate-forme sur laquelle il est placé,
- pour une donnée si elle circule sur un réseau, une coupure du réseau,
- pour une donnée si elle circule dans une trame, un défaut de la trame,
- pour une donnée si elle circule sur un calculateur passerelle entre deux réseaux, un défaut du calculateur, et
- pour une opération élémentaire, un défaut d'exécution logiciel ou un défaut du calculateur sur lequel est placé l'opération élémentaire.

L'ensemble des types de défaut ainsi que les composants auxquels ces types de défaut peuvent s'appliquer sont renseignés dans une base de donnée. Les enrichissements des événements suite au placement sont ainsi réalisés automatiquement.

Ce procédé peut être mis en oeuvre à l'aide d'un outil informatique permettant l'édition des différents objets nécessaires à la conception et l'automatisation partielle des différentes étapes du procédé constitué par l'invention.

Le procédé peut comprendre une étape d'analyse de la faisabilité et/ou faillibilité de fonctionnement dudit architecture et de la établissement d'une sortie indiquant ladite faisabilité et/ou faillibilité. L'architecture peut comporter un architecture pour équiper un véhicule, par exemple une voiture ou une camionnette.

Le procédé de l'invention peut être programmé sur un article de commerce comportant une mémoire lisible par un ordinateur, par exemple un CD, DVD ou équivalent ou sur le disque dur d'un ordinateur. Un tel programme pour le procédé sera exécutable par un ordinateur, et sera enregistré sur ladite mémoire pour être exécuté par ledit ordinateur.

## Revendications

1. Procédé de diagnostic de défauts de fonctionnement d'une architecture fonctionnelle composée d'un ensemble de fonctions liées à des composants électroniques (Aⁿᵢ; Cⁿᵢ; UCEₙ; B), produisant et consommant des données, au moins une desdites données (xᵢ) étant susceptible de prendre une valeur particulière (xᵢₚ) prédéterminée, consécutivement à l'apparition d'un défaut de fonctionnement de l'un au moins des composants ((Aₙⁱ ; Cⁿᵢ ; UCEₙ ; B) dudit ensemble, ce procédé étant **caractérisé en ce que**, étant donné un ensemble de fonctions, réalisant une prestation, dont les données d'entrées et de sorties peuvent être liées à des capteurs ou des actionneurs, il comporte :
i) une étape de placement des fonctions de l'architecture fonctionnelle sur une architecture matérielle,
ii) une étape de détermination de valeurs particulières au cours de laquelle on liste des valeurs particulières fonctionnelles indépendantes de l'architecture matérielle et correspondant à des défauts de fonctionnement des capteurs et des actionneurs,
iii) une étape de détermination du flot de données entre deux fonctions, ou entre un capteur et une fonction, ou entre une fonction et un actionneur au cours de laquelle on liste des valeurs particulières opérationnelles spécifiques à l'architecture matérielle et correspondant à des défauts de fonctionnement de ladite architecture matérielle permettant la localisation desdits défauts de fonctionnement des capteurs et des actionneurs à travers l'architecture fonctionnelle,
iv) une étape de diagnostic au cours de laquelle on forme le diagnostic fonctionnel de ladite prestation en fonction des listes issues des étapes de détermination, et
v) une étape d'enregistrement des valeurs particulières et dudit flot de données sur un moyen de mémorisation pour un outil prévu pour la validation de ladite architecture.

2. Procédé de diagnostic selon la revendication 1, dans lequel après l'étape (iv) de diagnostic fonctionnel, étant donné le choix d'un mode de réalisation se traduisant par l'architecture matérielle constituée de calculateurs, réseaux, liaisons filaires et connecteurs, on liste les valeurs particulières afin de déduire un diagnostic opérationnel de l'architecture électronique résultante.

3. Procédé de diagnostic selon les revendications 1 ou 2, dans lequel les valeurs particulières sont classifiées après placement des fonctions sur ladite architecture matérielle.

4. Procédé de diagnostic selon la revendication 3, dans lequel les valeurs particulières opérationnelles sont classifiées parmi au moins une des classes supplémentaires suivantes :
- bus coupé,
- trame corrompue,
- court-circuit appliqué à un fil,
- faux-contact appliqué à un connecteur de toron, de capteur, d'actionneur ou de calculateur, et
- défaut d'exécution appliqué à un micro-contrôleur.

5. Procédé selon les revendications 1 à 4, dans lequel étant donné un diagnostic opérationnel, pour une prestation, ayant listé les valeurs particulières fonctionnelles relevant des capteurs, actionneurs et fonctions réalisant ladite prestation, pour au moins un flot de données entre deux fonctions, ou entre un capteur et une fonction, ou entre une fonction et un actionneur, pour lequel aucune valeur particulière fonctionnelle n'est définie, si une valeur particulière opérationnelle est définie, alors on détermine automatiquement une valeur particulière fonctionnelle nouvelle pour ce flot.

6. Procédé selon les revendications 1 à 5, dans lequel on liste les événements redoutés non diagnostiqués et les événements redoutés non diagnosticables pour former une analyse de sûreté de fonctionnement d'une architecture fonctionnelle.

7. Procédé selon les revendications 1 à 6, dans lequel étant donné le choix d'un mode de réalisation se traduisant par l'architecture matérielle constituée de calculateurs, réseaux, liaisons filaires et connecteurs, on liste les valeurs particulières et évènements redoutés selon le procédé de la revendication 6 afin de déduire une analyse de sûreté de fonctionnement fonctionnelle de l'architecture fonctionnelle résultante.

8. Procédé de diagnostic selon l'une quelconque des revendications 1 à 7, dans lequel ladite architecture comporte une architecture pour équiper un véhicule.

9. Procédé de diagnostic selon l'une quelconque des revendications 1 à 8, comprenant une étape d'analyse de la faisabilité et/ou faillibilité de fonctionnement de ladite architecture fonctionnelle et de l'établissement d'une sortie indiquant ladite faisabilité et/ou faillibilité.

10. Un article de commerce comportant une mémoire lisible par un ordinateur, un programme exécutable par un ordinateur étant enregistré sur ladite mémoire pour le diagnostic de défauts de fonctionnement d'une architecture fonctionnelle composée d'un ensemble de fonctions liées à des composants électroniques produisant et consommant des données, au moins une desdites données étant susceptible de prendre une valeur particulière prédéterminée consécutivement à l'apparition d'un défaut de fonctionnement de l'un au moins des composants dudit ensemble, étant donné un ensemble de fonctions, réalisant une prestation, dont les données d'entrées et de sorties peuvent être liées à des capteurs ou des actionneurs, **caractérisé en ce que** ledit programme inclut un codage pour :
i) placer les fonctions de l'architecture fonctionnelle sur une architecture matérielle,
ii) déterminer et lister des valeurs particulières fonctionnelles indépendantes de l'architecture matérielle et correspondant à des défauts de fonctionnement des capteurs et des actionneurs,
iii) déterminer et lister les valeurs particulières opérationnelles spécifiques à l'architecture matérielle et correspondant à des défauts de fonctionnement de ladite architecture matérielle permettant la localisation desdits défauts de fonctionnement des capteurs et des actionneurs à travers ladite architecture fonctionnelle,
iv) former le diagnostic fonctionnel de ladite prestation en fonction des listes issues des étapes (ii) et (iii),
v) enregistrer lesdites valeurs particulières et ladite localisation sur un moyen de mémorisation pour un outil prévu pour la validation de ladite architecture.

11. Un outil informatique programmé pour le diagnostic de défauts de fonctionnement d'une architecture fonctionnelle utilisant des étapes du procédé selon l'une quelconque des revendications 1 à 9 ou programmé en utilisant un article de commerce selon la revendication 10.

## Claims

1. Method of diagnosis of operating faults of a functional architecture composed of a set of functions linked with electronic components (Aⁿᵢ; Cⁿᵢ; UCEₙ; B), producing and consuming data, at least one of said data (xᵢ) being able to take a predetermined particular value (xᵢₚ), subsequent to the appearance of an operating fault of at least one of the components (Aⁿᵢ; Cⁿᵢ; UCEₙ; B) of said set, this method being **characterized in that**, given a set of functions, carrying out a service, whose input data and output data may be linked with sensors or actuators, it comprises:
i) a step of mapping the functions of the functional architecture onto a hardware architecture,
ii) a step of determining particular values, in the course of which are listed functional particular values which are independent of the hardware architecture and correspond to operating faults of the sensors and actuators,
iii) a step of determining the flow of data between two functions, or between a sensor and a function, or between a function and an actuator, in the course of which are listed operational particular values which are specific to the hardware architecture and correspond to operating faults of said hardware architecture allowing location of said operating faults of the sensors and actuators through the functional architecture,
iv) a diagnosis step in the course of which the functional diagnosis of said service is formed as a function of the lists arising from the determination steps, and
v) a step of recording the particular values and said flow of data on a storage means for a tool designed for the validation of said architecture.

2. Method of diagnosis according to Claim 1, in which after the step (iv) of functional diagnosis, given the choice of an embodiment actualized by the hardware architecture consisting of processors, networks, wire links and connectors, the particular values are listed so as to deduce an operational diagnosis of the resulting electronic architecture.

3. Method of diagnosis according to Claims 1 or 2, in which the particular values are classified after mapping the functions onto said hardware architecture.

4. Method of diagnosis according to Claim 3, in which the operational particular values are classified from among at least one of the following additional classes:
- bus broken,
- frame corrupted,
- short-circuit applied to a wire,
- false contact applied to a connector of a strand, sensor, actuator or processor, and
- execution fault applied to a micro-controller.

5. Method according to Claims 1 to 4, in which given an operational diagnosis, for a service, having listed the functional particular values pertaining to the sensors, actuators and functions carrying out said service, for at least one flow of data between two functions, or between a sensor and a function, or between a function and an actuator, for which no functional particular value is defined, if an operational particular value is defined, then a new functional particular value is determined automatically for this flow.

6. Method according to Claims 1 to 5, in which the undiagnosed feared events and the undiagnosable feared events are listed so as to form an analysis of operating dependability of a functional architecture.

7. Method according to Claims 1 to 6, in which, given the choice of an embodiment actualized by the hardware architecture consisting of processors, networks, wire links and connectors, the particular values and feared events are listed according to the method of Claim 6 so as to deduce an analysis of functional operating dependability of the resulting functional architecture.

8. Method of diagnosis according to any one of Claims 1 to 7, in which said architecture comprises an architecture for equipping a vehicle.

9. Method of diagnosis according to any one of Claims 1 to 8, comprising a step of analysing the operating feasibility and/or fallibility of said functional architecture and of establishing an output indicating said feasibility and/or fallibility.

10. Commercial article comprising a memory readable by a computer, a program executable by a computer being recorded on said memory for the diagnosis of operating faults of a functional architecture composed of a set of functions linked with electronic components producing and consuming data, at least one of said data being able to take a predetermined particular value subsequent to the appearance of an operating fault of at least one of the components of said set, given a set of functions, carrying out a service, whose input data and output data may be linked with sensors or actuators, **characterized in that** said program includes a coding for:
i) mapping the functions of the functional architecture onto a hardware architecture,
ii) determining and listing functional particular values which are independent of the hardware architecture and correspond to operating faults of the sensors and actuators,
iii) determining and listing the operational particular values which are specific to the hardware architecture and correspond to operating faults of said hardware architecture allowing location of said operating faults of the sensors and actuators through said functional architecture,
iv) forming the functional diagnosis of said service as a function of the lists arising from steps (ii) and (iii), and
v) recording said particular values and said location on a storage means for a tool designed for the validation of said architecture.

11. Computerized tool programmed for the diagnosis of operating faults of a functional architecture using steps of the method according to any one of Claims 1 to 9 or programmed using a commercial article according to Claim 10.

## Patentansprüche

1. Verfahren zur Diagnose von Betriebsfehlern einer funktionellen Architektur, bestehend aus einer Gruppe von Funktionen, die mit Daten erzeugenden und verbrauchenden elektronischen Bauteilen (Aⁿᵢ; Cⁿᵢ; UCEₙ; B) verbunden sind, wobei mindestens einer der Datenwerte (xᵢ) nach dem Auftreten eines Betriebsfehlers mindestens eines der Bauteile (Aⁿᵢ; Cⁿᵢ; UCEₙ; B) der Gruppe einen vorbestimmten Einzelwert (xᵢₚ) annehmen kann, wobei dieses Verfahren **dadurch gekennzeichnet ist, dass** es, aufgrund einer Gruppe von Funktionen, die eine Leistung erbringen, deren Eingangs- und Ausgangsdaten mit Sensoren oder Aktoren verbunden sein können, Folgendes aufweist:
i) einen Schritt der Anordnung der Funktionen der funktionellen Architektur auf einer materiellen Architektur,
ii) einen Schritt der Bestimmung von Einzelwerten, während dem funktionelle Einzelwerte aufgelistet werden, die von der materiellen Architektur unabhängig sind und Betriebsfehlern der Sensoren und der Aktoren entsprechen,
iii) einen Schritt der Bestimmung des Datenflusses zwischen zwei Funktionen, oder zwischen einem Sensor und einer Funktion, oder zwischen einer Funktion und einem Aktor, während dem operative Einzelwerte aufgelistet werden, die für die materielle Architektur spezifisch sind und Betriebsfehlern der materiellen Architektur entsprechen, was die Lokalisierung der Betriebsfehler der Sensoren und der Aktoren quer durch die funktionelle Architektur erlaubt,
iv) einen Diagnoseschritt, während dem die funktionelle Diagnose der Leistung in Abhängigkeit von den aus den Bestimmungsschritten stammenden Listen erstellt wird, und
v) einen Schritt des Speicherns der Einzelwerte und des Datenflusses in einer Speichereinrichtung für ein Werkzeug, das zur Validierung der Architektur vorgesehen ist.

2. Diagnoseverfahren nach Anspruch 1, bei dem nach dem Schritt (iv) der funktionellen Diagnose, aufgrund der Wahl einer Ausführungsform, die durch die materielle Architektur ausgedrückt wird, welche aus Rechnern, Netzwerken, Drahtverbindungen und Steckverbindern besteht, die Einzelwerte aufgelistet werden, um eine Betriebsdiagnose der resultierenden elektronischen Architektur abzuleiten.

3. Diagnoseverfahren nach den Ansprüchen 1 oder 2, bei dem die Einzelwerte nach Anordnung der Funktionen auf der materiellen Architektur eingestuft werden.

4. Diagnoseverfahren nach Anspruch 3, bei dem die operativen Einzelwerte unter mindestens einer der folgenden zusätzlichen Klassen eingestuft werden:
- abgeschalteter Bus,
- korrumpierter Rahmen,
- an einen Draht angelegter Kurzschluss,
- an einen Litzen-, Sensor-, Aktor- oder Rechner-Steckverbinder angelegter falscher Kontakt, und
- Ausführungsfehler, angewendet an einen Mikrocontroller.

5. Diagnoseverfahren nach den Ansprüchen 1 bis 4, bei dem, aufgrund einer Betriebsdiagnose für eine Leistung, die die funktionellen Einzelwerte aufgelistet hat, die zu den die Leistung erbringenden Sensoren, Aktoren und Funktionen gehören, für mindestens einen Datenfluss zwischen zwei Funktionen, oder zwischen einem Sensor und einer Funktion, oder zwischen einer Funktion und einem Aktor, für den kein funktioneller Einzelwert definiert ist, wenn ein operativer Einzelwert definiert wird, automatisch ein neuer funktioneller Einzelwert für diesen Fluss bestimmt wird.

6. Diagnoseverfahren nach den Ansprüchen 1 bis 5, bei dem die befürchteten nicht diagnostizierten Ereignisse und die befürchteten nicht diagnostizierbaren Ereignisse aufgelistet werden, um eine Betriebssicherheitsanalyse einer funktionellen Architektur zu erstellen.

7. Diagnoseverfahren nach den Ansprüchen 1 bis 6, bei dem aufgrund der Wahl einer Ausführungsform, die durch die aus Rechnern, Netzwerken, Drahtverbindungen und Steckverbindern bestehende materielle Architektur ausgedrückt wird, die Einzelwerte und befürchteten Ereignisse gemäß dem Verfahren nach Anspruch 6 aufgelistet werden, um eine funktionelle Betriebssicherheitsanalyse der resultierenden funktionellen Architektur abzuleiten.

8. Diagnoseverfahren nach einem der Ansprüche 1 bis 7, bei dem die Architektur eine Architektur zur Ausstattung eines Fahrzeugs aufweist.

9. Diagnoseverfahren nach einem der Ansprüche 1 bis 8, das einen Schritt der Analyse der Durchführbarkeit und/oder der Betriebsfehlbarkeit der funktionellen Architektur und des Aufbaus eines Ausgangssignals enthält, das die Durchführbarkeit und/oder die Fehlbarkeit angibt.

10. Handelsartikel, der einen computerlesbaren Speicher aufweist, wobei ein von einem Computer ausführbares Programm im Speicher für die Betriebsfehlerdiagnose einer funktionellen Architektur gespeichert ist, die aus einer Gruppe von Funktionen besteht, welche mit Daten erzeugenden und verbrauchenden elektronischen Bauteilen verbunden sind, wobei mindestens einer der Datenwerte nach dem Auftreten eines Betriebsfehlers mindestens eines der Bauteile der Gruppe einen vorbestimmten Einzelwert annehmen kann, aufgrund einer Gruppe von Funktionen, die eine Leistung erbringen, deren Eingangs- und Ausgangsdaten mit Sensoren oder Aktoren verbunden sein können, **dadurch gekennzeichnet, dass** das Programm eine Codierung enthält, um:
i) die Funktionen der funktionellen Architektur auf einer materiellen Architektur anzuordnen,
ii) funktionelle Einzelwerte zu bestimmen und aufzulisten, die von der materiellen Architektur unabhängig sind und Betriebsfehlern der Sensoren und der Aktoren entsprechen,
iii) die operativen Einzelwerte zu bestimmen und aufzulisten, die für die materielle Architektur spezifisch sind und Betriebsfehlern der materiellen Architektur entsprechen, was die Lokalisierung der Betriebsfehler der Sensoren und der Aktoren quer durch die funktionelle Architektur ermöglicht,
iv) die funktionelle Diagnose der Leistung in Abhängigkeit von den aus den Schritten (ii) und (iii) stammenden Listen zu erstellen,
v) die Einzelwerte und die Lokalisierung in einer Speichereinrichtung für ein Werkzeug zu speichern, das für die Validierung der Architektur vorgesehen ist.

11. EDV-Werkzeug, das für die Diagnose von Betriebsfehlern einer funktionellen Architektur programmiert ist, das Schritte des Verfahrens nach einem der Ansprüche 1 bis 9 verwendet oder unter Verwendung eines Handelsartikels nach Anspruch 10 programmiert wird.
